# EUROPEAN PATENT SPECIFICATION

(11) **EP 2 579 642 B1**
(45) Date of publication and mention of the grant of the patent: **18.10.2017**
(21) Application number: 11786023.9
(22) Date of filing: 06.05.2011
(51) Int. Cl.: H04W 28/10, H04W 8/08, H04L 12/911, H04W 76/02

(54) **METHOD, DEVICE AND SYSTEM FOR CONTROLLING LOCALIZATION TRAFFIC EXCHANGE IN MOBILE WIDEBAND NETWORK**
VERFAHREN, VORRICHTUNG UND SYSTEM ZUR STEUERUNG EINES LOKALISIERUNGSVERKEHRSAUSTAUSCHS IN EINEM BREITBAND-MOBILFUNKNETZ
PROCÉDÉ, DISPOSITIF ET SYSTÈME DE COMMANDE D'ÉCHANGE DE TRAFIC DE LOCALISATION DANS UN RÉSEAU À LARGE BANDE MOBILE

(30) Priority: 24.05.2010 CN 201010187357
(43) Date of publication of application: 10.04.2013
(73) Proprietor: Huawei Technologies Co., Ltd., Longgang District Shenzhen, Guangdong 518129 (CN)
(72) Inventor: JIANG, Ming, Guangdong 518129 (CN)
(74) Representative: Körber, Martin Hans
(86) International application number: PCT/CN2011/073786
(87) International publication number: WO 2011/147251

(56) References cited:
- WO-A1-02/39773
- CN-A- 1 937 554
- KR-A- 20100 038 562
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.1, 24 March 2010 (2010-03-24), pages 1-37, XP050402025, [retrieved on 2010-03-24]

## Description

### FIELD OF THE INVENTION

The present invention relates to the field of communications, and in particular, to two interrelated methods, two corresponding and interrelated nodes and a system comprising the interrelated nodes, for controlling a localized traffic exchange in a mobile wideband network.

### BACKGROUND OF THE INVENTION

According to the prediction of the development of a mobile wideband network, from 2009 to 2014, the mobile wideband network will have a compound growth rate of 108%, and compared with 2009, the traffic in 2014 will be increased by nearly 40 times, which make the costs of the network transmission increased substantially. However, in mobile wideband traffic, a Mobile VoIP (mobile voice over IP), a Mobile P2P (mobile point-to-point) and a Mobile Video (mobile video) are all localized traffic. The so-called localized traffic is that the traffic has a feature of converging based on region, that is, centered on a communication party, the nearer to the communication party, the larger the traffic is, and the farther to the communication party, the smaller the traffic is. The convergence of this localized traffic is similar to a voice service, which is significantly different from Internet network communication in the current standard meaning. According to this feature, similar to a voice service, a network may implement the optimization of localized traffic exchange, thereby reducing transmission and forwarding costs.

At present, two schemes are frequently discussed, one is the Gi offload scheme: through a NodeB or an RNC (Radio Network Controller, radio network controller), the traffic insensitive to mobility is bypassed directly to a bearer network, thereby reducing the costs of a local TDM (Time Division Multiplexing, time division multiplexing) bearer, RNC, and GGSN (Gateway GPRS Support Node, gateway GPRS (General Packet Radio Service, general packet radio service) support node); and the other is to move the GGSN to a lower layer, and at the same time, no MX exists beside the GGSN, thereby reducing the costs of the Internet egress, the Backbone and the GGSN.

In the process of implementing the localized traffic exchange control, the inventor found that the prior art at least has the following problem: both of the foregoing two schemes change the original network architecture, and increase the network complexity and the operating costs.

"3rd Generation Partnership Project; Technical Specification Group Services and System Aspects; Local IP Access and Selected IP Traffic Offload (Release 10)" discloses that the RAN provides the SGSN with the IP address of one or more GGSNs that the RAN believes offers good traffic routing capabilities. The RAN provides this information to the SGSN at every RAN initiated connection establishment and, from the target RNS, at every SRNS relocation. In order to enable RNC breakout, the SGSN allocates a GGSN function located based on the IP address for GTP control plane received for breakout from the RNC during the Iu connection establishment. And to enable LIPA, the SGSN allocates a GGSN function located at the HNB based on the IP address for GTP control plane for LIPA received from the RAN.

### SUMMARY OF THE INVENTION

The present invention is defined by the accompanying independent claims. Preferred embodiments are defined by the dependent claims. Therefore, the present invention is defined by two interrelated methods, two corresponding and interrelated nodes and a system comprising the claimed interrelated nodes, for controlling a localized traffic exchange in a mobile wideband network, so as to implement the localized traffic exchange while maintaining the original network architecture and maintaining the network complexity and the operating costs.

To meet the preceding purpose, the embodiments of the present invention use the following technical solutions:
A method, implemented by a channel control node, for controlling a localized traffic exchange in a mobile wideband network, includes:
   receiving an access request of a mobile terminal, and obtaining condition information that indicates whether a traffic node on a link corresponding to the access request is permitted to implement the localized traffic exchange; and
   if the condition information is that the traffic node on the link corresponding to the access request is permitted to implement the localized traffic exchange, sending indication information to the traffic node on the link corresponding to the access request, so as to enable the traffic node that is permitted to implement the localized traffic exchange on the link corresponding to the access request and a subsequent traffic node to implement the localized traffic exchange in response to the access request according to the indication information and presetting of the traffic node and the subsequent traffic node;
   wherein the condition information comprises: information that indicates whether an access point name, APN, of the mobile terminal supports localized traffic control and information that indicates whether a packet data protocol, PDP, of the mobile terminal supports the localized traffic control; and
   if the condition information is that the traffic node on the link corresponding to the access request is permitted to implement the localized traffic exchange, the sending the indication information to the traffic node on the link corresponding to the access request comprises: if the condition information is that the APN of the mobile terminal supports the localized traffic control and the PDP of the mobile terminal supports the localized traffic control, sending the indication information to the traffic node on the link corresponding to the access request.
   characterized in that the obtaining the condition information that indicates whether the traffic node on the link corresponding to the access request is permitted to implement the localized traffic exchange comprises:
      receiving activation request information sent by a mobility network element control node, wherein the activation request information comprises the information that indicates whether the APN of the mobile terminal supports the localized traffic control; and
      sending a PDP policy request of the mobile terminal to a policy charging and control rules function, PCRF, and receiving PDP policy response information returned by the PCRF, wherein the response information comprises the information that indicates whether the PDP of the mobile terminal supports the localized traffic control;
      wherein the implementing, by the traffic node that is permitted to implement the localized traffic exchange on the link corresponding to the access request and the subsequent traffic node, the localized traffic exchange in response to the access request according to the indication information and the presetting of the traffic node and the subsequent traffic node comprises:
         implementing, by the traffic node that is permitted to implement the localized traffic exchange on the link corresponding to the access request and the subsequent traffic node, the localized traffic exchange for the PDP of the mobile terminal according to the indication information and the presetting of the traffic node and the subsequent traffic node.

A method, implemented by a traffic node, for controlling a localized traffic exchange in a mobile wideband network, includes:
receiving indication information used to indicate that the traffic node is permitted to implement the localized traffic exchange;
according to presetting of the traffic node, determining whether the traffic node supports the localized traffic exchange; and
if it is determined that the traffic node supports the localized traffic exchange, implementing the localized traffic exchange according to the indication information;
characterized in that the method further comprises:
   after a PDP of a mobile terminal implements the localized traffic exchange, when lawful interception needs to be performed on the mobile terminal, receiving a request message for canceling the localized traffic exchange for the PDP of the mobile terminal, wherein the request message comprises PDP information of the mobile terminal; and
   canceling the localized traffic exchange of the traffic node for the PDP of the mobile terminal according to the PDP information of the mobile terminal.

A channel control node, includes:
a first receiving unit, configured to receive an access request of a mobile terminal;
an obtaining unit, configured to obtain condition information that indicates whether a traffic node on a link corresponding to the access request is permitted to implement localized traffic exchange; and
a first sending unit, configured to send indication information to the traffic node on the link corresponding to the access request when the condition information obtained by the obtaining unit is that the traffic node on the link corresponding to the access request is permitted to implement the localized traffic exchange, so as to enable the traffic node that is permitted to implement the localized traffic exchange on the link corresponding to the access request and a subsequent traffic node to implement the localized traffic exchange in response to the access request according to the indication information and presetting of the traffic node and the subsequent traffic node;
wherein the condition information comprises:
   information that indicates whether an APN of the mobile terminal supports the localized traffic control and information that indicates whether a PDP of the mobile terminal supports the localized traffic control; and
   the first sending unit is configured to send indication information to the traffic node on the link corresponding to the access request when the condition information obtained by the obtaining unit is that the APN of the mobile terminal supports the localized traffic control, and the PDP of the mobile terminal supports the localized traffic control;
characterized in that the obtaining unit comprises:
   a first receiving module, configured to receive activation request information sent by a mobility network element control node, wherein the activation request information comprises the information that indicates whether an APN of the mobile terminal supports the localized traffic control;
   a sending module, configured to send a PDP policy request of the mobile terminal to a PCRF; and
   a second receiving module, configured to receive PDP policy response information returned by the PCRF, wherein the response information comprises the information that indicates whether the PDP of the mobile terminal supports the localized traffic control.

A traffic node, includes:
a first receiving unit, configured to receive indication information used to indicate that the traffic node is permitted to implement localized traffic exchange;
a determining unit, configured to determine whether the traffic node supports the localized traffic exchange according to presetting of the traffic node; and
an implementing unit, configured to implement the localized traffic exchange according to the indication information when the determining unit determines that the traffic node supports the localized traffic exchange;
characterized in that the traffic node further comprises:
   a second receiving unit, configured to, after a PDP of a mobile terminal implements the localized traffic exchange, when lawful interception needs to be performed on the mobile terminal, receive a request message for canceling the localized traffic exchange for the PDP of the mobile terminal, wherein the request message comprises PDP information of the mobile terminal; and
   a deleting unit, configured to cancel the localized traffic exchange of the traffic node for the PDP of the mobile terminal according to the PDP information of the mobile terminal received by the second receiving unit.

A system for controlling a localized traffic exchange in a mobile wideband network, includes:
a channel control node, configured to receive an access request of a mobile terminal, and obtain condition information that indicates whether a traffic node on a link corresponding to the access request is permitted to implement the localized traffic exchange; if the condition information is that the traffic node on the link corresponding to the access request is permitted to implement the localized traffic exchange, send indication information to the traffic node on the link corresponding to the access request, so as to enable the traffic node that is permitted to implement the localized traffic exchange on the link corresponding to the access request and a subsequent traffic node to implement the localized traffic exchange in response to the access request according to the indication information and presetting of the traffic node and the subsequent traffic node; and
the traffic node, configured to receive the indication information used to indicate that the traffic node is permitted to implement the localized traffic exchange; determine whether the traffic node supports the localized traffic exchange according to the presetting of the traffic node; and if it is determined that the traffic node supports the localized traffic exchange, implement the localized traffic exchange according to the indication information.

In the technical solutions provided by the embodiments of the present invention, when the access request of the mobile terminal is received, the traffic node on the link corresponding to the access request supports the localized traffic exchange, and the condition information that the traffic node on the link corresponding to the access request is permitted to implement the localized traffic exchange is obtained, the localized traffic exchange in response to the access request of the mobile terminal is implemented at the traffic node. Compared with the prior art, the implementation of the localized traffic exchange does not move any network element already existing in the network or add any new device, but adds, in the traffic node which is originally only used to converge traffic, merely the function of supporting the localized traffic exchange. When the condition of the localized traffic exchange is satisfied, the localized traffic exchange is implemented, the original network architecture is maintained, and the drawbacks of the complication of the traffic transmission and the high operating costs caused by changing of the original network architecture are prevented. Therefore, the localized traffic exchange is implemented while the original network architecture, the network complexity, and the operating costs are maintained.

### BRIEF DESCRIPTION OF THE DRAWINGS

To illustrate the technical solutions in the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a flow chart of a method for controlling a localized traffic exchange in a mobile wideband network of a channel control node according to Embodiment 1 of the present invention;
FIG. 2 is a flow chart of a method for controlling a localized traffic exchange in a mobile wideband network of a traffic convergence node according to Embodiment 1 of the present invention;
FIG. 3A and FIG. 3B are flow charts of a method for controlling a localized traffic exchange in a mobile wideband network in a WCDMA network according to Embodiment 2 of the present invention;
FIG. 4 is an operation schematic diagram of localized traffic exchange performed by a terminal in the WCDMA network according to Embodiment 2 of the present invention;
FIG. 5 is an operation flow chart of performing lawful interception on a terminal B in the WCDMA network according to Embodiment 2 of the present invention;
FIG. 6 is an operation flow chart of adding a content node in the WCDMA network according to Embodiment 2 of the present invention;
FIG. 7 is a flow chart of a method for controlling a localized traffic exchange in a mobile wideband network in an LTE or SAE network according to Embodiment 3 of the present invention;
FIG. 8 is a composition block diagram of a channel control node according to Embodiment 4 of the present invention;
FIG. 9 is a composition block diagram of another channel control node according to Embodiment 4 of the present invention;
FIG. 10 is a composition block diagram of another channel control node according to Embodiment 4 of the present invention;
FIG. 11 is a composition block diagram of a traffic convergence node according to Embodiment 4 of the present invention;
FIG. 12 is a composition block diagram of another traffic convergence node according to Embodiment 4 of the present invention;
FIG. 13 is a composition block diagram of another traffic convergence node according to Embodiment 4 of the present invention; and
FIG. 14 is a composition block diagram of a system for controlling a localized traffic exchange in a mobile wideband network according to Embodiment 4 of the present invention.

### DETAILED DESCRIPTION OF THE EMBODIMENTS

The technical solutions of the embodiments of the present invention are hereinafter described clearly and completely with reference to the accompanying drawings in the embodiments of the present invention. Evidently, the described embodiments are only some exemplary embodiments of the present invention, rather than all embodiments of the present invention. All other embodiments obtained by persons of ordinary skill in the art based on the embodiments of the present invention without creative efforts shall fall within the protection scope of the present invention.

### Embodiment 1

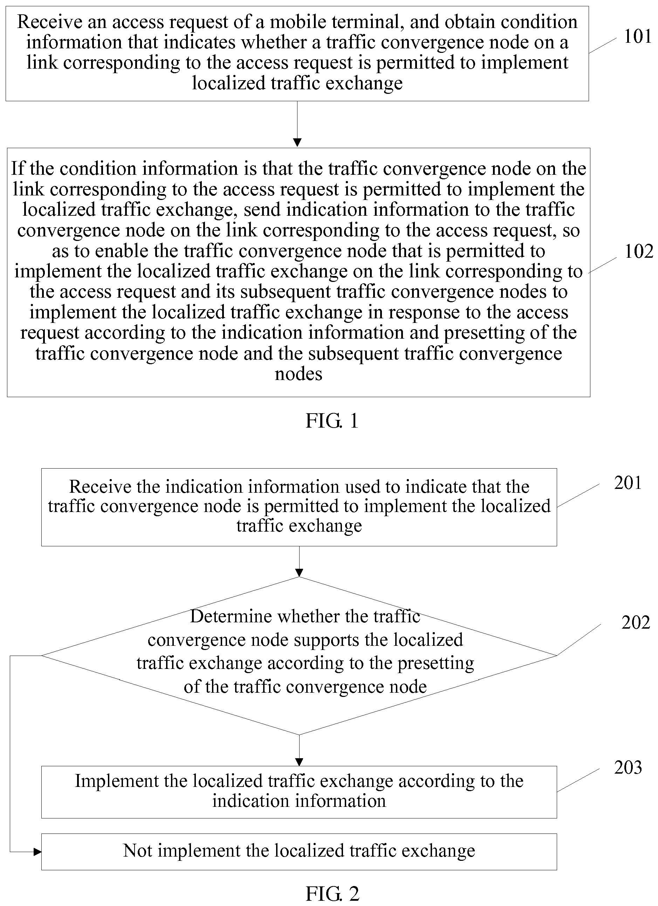

An embodiment of the present invention provides a method for controlling a localized traffic exchange in a mobile wideband network, and the method is implemented by a channel control node. When the channel control node is in a WCDMA (Wideband Code Division Multiple Access, wideband code division multiple access) or a Femto Cell network, the gateway node is a GGSN (GateWay GPRS Support Node, gateway GPRS (General Packet Radio Service, general packet radio service) support node); while in an LTE (Long Term Evolution, long term evolution) or an SAE (System Architecture Evolution, system architecture evolution) network, the channel control node is a PDN-GW (Public Data NetWorks GateWay, public data networks gateway). As shown in FIG. 1, the method includes:
101: Receive an access request of a mobile terminal, and obtain condition information that indicates whether a traffic convergence node on a link corresponding to the access request is permitted to implement the localized traffic exchange. The access request may be, but not limited to, a call request, an activation request or a data transmission request.

The condition information may include: information that indicates whether an APN (Access Point Name, access point name) of the mobile terminal supports the localized traffic control and information that indicates whether a PDP of the mobile terminal supports the localized traffic control. The information that indicates whether the APN supports the localized traffic control may be set at an HLR (Home Location Register, home location register) in a WCDMA or a Femto Cell network or set at an HSS (Home Subscriber Server, home subscriber server) in an LTE or SAE network by an operator according to the property of the APN when the APN is defined. The information is obtained by requesting, by a mobility network element control node, to the HLR or the HSS, and the obtained information is added to a subscription list of the mobility network element control node. The information that indicates whether the PDP supports the localized traffic control may be set at a PCRF by an operator according to the property of the APN when the PDP is defined. The embodiment of the present invention is not limited thereto.

The information that indicates whether the APN of the mobile terminal supports the localized traffic control may be obtained by receiving activation request information sent by the mobility network element control node, which may include: receiving the activation request information sent by the mobility network element control node, where the activation request information includes the information that indicates whether the APN of the mobile terminal supports the localized traffic control. The information that indicates whether the PDP of the mobile terminal supports the localized traffic control may be obtained by sending a PDP policy request of the mobile terminal to the PCRF, which may include: sending the PDP policy request of the mobile terminal to the PCRF, and receiving PDP policy response information returned by the PCRF, where the response information includes the information that indicates whether the PDP of the mobile terminal supports the localized traffic control.

Traffic convergence nodes vary with different network architectures. For example, in a WCDMA or a Femto Cell network, the traffic convergence nodes on a communication link from the bottom layer to the upper layer may sequentially be a NodeB, an RNC (Radio Access Bearer, radio access bearer), and an SGSN (Service GPRS Support Node, service GPRS (General Packet Radio Service, general packet radio service) support node); while in an LTE or an SAE network, the traffic convergence nodes on a communication link from the bottom layer to the upper layer may sequentially be a NodeB and a Serving GW (Serving GateWay, serving gateway).

102: If the condition information is that the traffic convergence node on the link corresponding to the access request is permitted to implement the localized traffic exchange, send indication information to the traffic convergence node on the link corresponding to the access request, so as to enable the traffic convergence node that is permitted to implement the localized traffic exchange on the link corresponding to the access request and a subsequent traffic convergence node to implement the localized traffic exchange in response to the access request according to the indication information and presetting of the traffic convergence node and the subsequent traffic convergence node.

The implementing, by the traffic convergence node that is permitted to implement the localized traffic exchange on the link corresponding to the access request and the subsequent traffic convergence node, the localized traffic exchange in response to the access request according to the indication information and the presetting of the traffic convergence node and the subsequent traffic convergence node may include: implementing, by the traffic convergence node that is permitted to implement the localized traffic exchange on the link corresponding to the access request and the subsequent traffic convergence node, the localized traffic exchange for the PDP of the mobile terminal according to the indication information and the presetting of the traffic convergence node and the subsequent traffic convergence node.

If the condition information is that the traffic convergence node on the link corresponding to the access request is permitted to implement the localized traffic exchange, the sending the indication information to the traffic convergence node on the link corresponding to the access request includes: if the condition information is that the APN of the mobile terminal supports the localized traffic control and the PDP of the mobile terminal supports the localized traffic control, sending the indication information to the traffic convergence node on the link corresponding to the access request; while if the APN of the mobile terminal or the PDP of the mobile terminal does not support the localized traffic control, not sending the indication information to the traffic convergence node on the link corresponding to the access request. Furthermore, after the mobile terminal accesses the network successfully to implement data communication, the determination of whether the traffic convergence node on the link corresponding to the access request is permitted to implement the localized traffic exchange not only includes the determination based on the foregoing condition information, but also includes the determination of whether the mobile terminal is under lawful interception. If the mobile terminal is under lawful interception, even if both of the foregoing two conditions are satisfied, the traffic convergence node on the link corresponding to the access request may not be permitted to implement the localized traffic exchange, because the traffic of the mobile terminal, on which the lawful interception needs to be performed, must be exchanged at the channel control node, so as to implement the lawful interception on the mobile terminal.

When the indication information that the traffic convergence node is permitted to implement the localized traffic exchange is delivered, because of the architecture of the mobile wideband network, the indication information needs to be sent to the corresponding traffic convergence nodes on a communication link layer by layer. That is, firstly the indication information is sent to the traffic convergence node on the link corresponding to the access request, and after the traffic convergence node on the link corresponding to the access request receives the indication information, the indication information is delivered to the subsequent traffic convergence node layer by layer, so as to enable the subsequent traffic convergence node to implement the localized traffic exchange in response to the access request according to the indication information and the presetting of the subsequent traffic convergence node. For example, in a WCDMA, the channel control node is a GGSN, the traffic convergence node on the link corresponding to the access request is an SGSN, the subsequent traffic convergence node in the next layer of the SGSN is an RNC, while the subsequent traffic convergence node in the next layer of the RNC is a NodeB, and the NodeB is the traffic convergence node in the bottom layer on the communication link of the mobile terminal. The process of sending the indication information to the traffic convergence node is that, the GGSN sends the indication information to the SGSN; after receiving the indication information sent by the GGSN, the SGSN sends the indication information to the RNC; and after receiving the indication information sent by the SGSN, the RNC sends the indication information to the NodeB.

Furthermore, after the traffic convergence node in the network implements the localized traffic exchange for the PDP of the mobile terminal, the embodiment of the present invention further provides a corresponding method for performing lawful interception on the mobile terminal, which may include:
receiving a request for lawful interception on the mobile terminal; determining whether the localized traffic exchange for the PDP of the mobile terminal is started; if it is determined that the localized traffic exchange for the PDP of the mobile terminal is started, sending a request message for canceling the localized traffic exchange for the PDP of the mobile terminal to the traffic convergence node that implements the localized traffic exchange for the PDP of the mobile terminal, so as to implement the lawful interception on the mobile terminal, where the request message includes PDP information of the mobile terminal; and if it is determined that the mobile terminal does not start the localized traffic exchange, implementing the lawful interception on the mobile terminal directly.

The embodiment of the present invention further provides a method for controlling a localized traffic exchange in a mobile wideband network, and the method is implemented by the traffic convergence node. As shown in FIG. 2, the method includes:
201: Receive the indication information used to indicate that the traffic convergence node is permitted to implement the localized traffic exchange.
202: The traffic convergence node determines whether the traffic convergence node supports the localized traffic exchange according to the presetting of the traffic convergence node; if it is determined that the traffic convergence node supports the localized traffic exchange, step 203 is performed; and if it is determined that the traffic convergence node does not support the localized traffic exchange, the localized traffic exchange is not implemented.
203: Implement the localized traffic exchange according to the indication information.

Furthermore, after the traffic convergence node in the network implements the localized traffic exchange for the PDP of the mobile terminal, if the lawful interception needs to be performed on the mobile terminal, the request message for canceling the localized traffic exchange for the PDP of the mobile terminal is sent to the traffic convergence node that implements the localized traffic exchange for the PDP of the mobile terminal, where the request message includes the PDP information of the mobile terminal. The embodiment of the present invention further provides a corresponding processing method, including:
receiving the request message for canceling the localized traffic exchange for the PDP of the mobile terminal, where the request message includes the PDP information of the mobile terminal; and canceling the localized traffic exchange of the traffic convergence node for the PDP of the mobile terminal according to the PDP information of the mobile terminal.

Furthermore, after the traffic convergence node in the network implements the localized traffic exchange for the PDP of the mobile terminal, to prevent that, when a newly-added content node communicates with the mobile terminal, the localized traffic exchange for the PDP of the mobile terminal needs to be implemented at the channel control node so as to implement the localized traffic exchange, the embodiment of the present invention further provides a corresponding method for adding a content node, including:
receiving command configuration information for adding a content node, where the command configuration information includes a content node adding command, and the command configuration information is set at a maintenance console and sent to a corresponding traffic convergence node; and the corresponding traffic convergence node sets the content node according to the command configuration information.

In the embodiment of the present invention, when the access request of the mobile terminal is received, the traffic convergence node on the link corresponding to the access request supports the localized traffic exchange, and the condition information that the traffic convergence node on the link corresponding to the access request is permitted to implement the localized traffic exchange is obtained, the localized traffic exchange in response to the access request is implemented at the traffic convergence node. Compared with the prior art, the implementation of the localized traffic exchange does not move any network element already existing in the network or add any new device, but adds, in the traffic convergence node which is originally only used to converge traffic, merely the function of supporting the localized traffic exchange. When the condition of the localized traffic exchange is satisfied, the localized traffic exchange is implemented, the original network architecture is maintained, and the drawbacks of the complication of the traffic transmission and the high operating costs caused by changing of the original network architecture are prevented. Therefore, the localized traffic exchange is implemented while the original network architecture, the network complexity and the operating costs are maintained.

### Embodiment 2

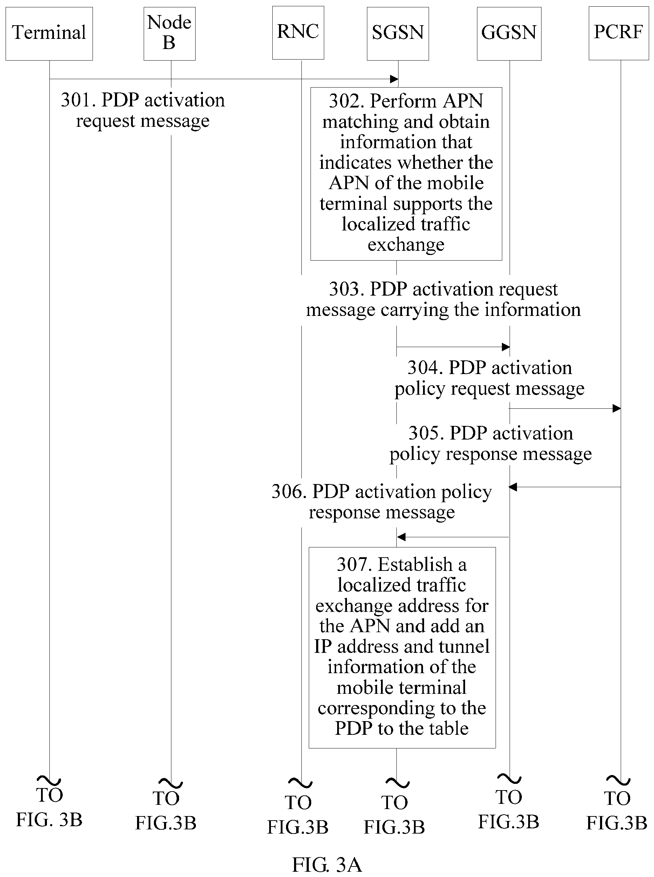

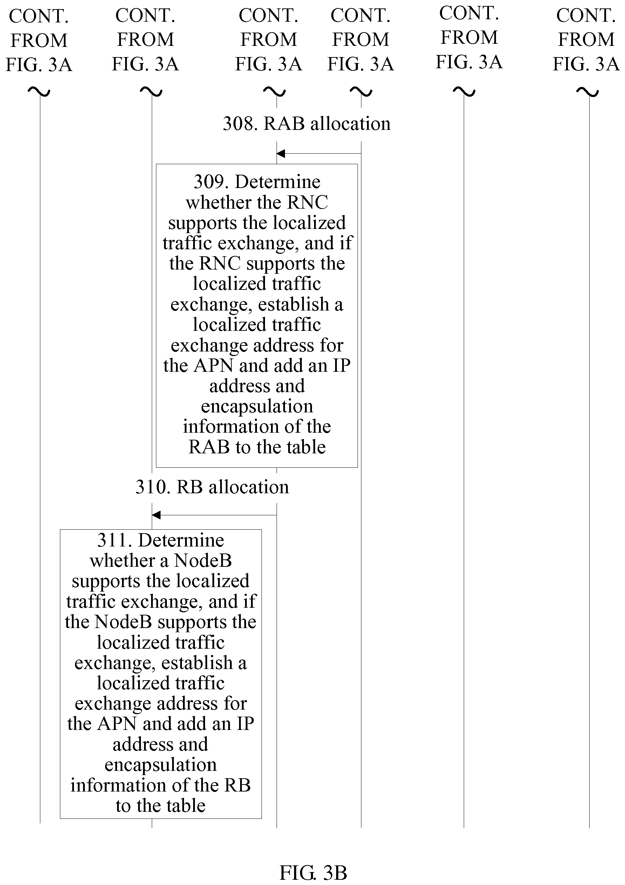

An embodiment of the present invention provides a method for controlling a localized traffic exchange in a mobile wideband network. The embodiment of the present invention takes the implementation in a WCDMA and in a process in which a mobile terminal requests PDP activation as an example to illustrate in detail a method for controlling a localized traffic exchange in a mobile wideband network. As shown in FIG. 3A and FIG. 3B, the method includes:
301: A mobile terminal sends a PDP activation request message to an SGSN, where the PDP activation request message includes an APN of the terminal.
302: The SGSN receives the PDP activation request message, and according to the APN of the mobile terminal included in the message, queries whether an APN matching with the APN of the mobile terminal exists in a subscription list. When it is found that the APN matching with the APN of the mobile terminal exists in the subscription list, the SGSN obtains the information that indicates whether the APN of the mobile terminal supports the localized traffic exchange. The information that indicates whether the APN supports the localized traffic exchange is set at an HLR according to the property of the APN when the APN is defined, and is obtained by requesting, by the SGSN, to the HLR. The obtained information is added to the subscription list of the SGSN.
   The subscription list, stored in the SGSN, includes the APN and the information that indicates whether the APN supports the localized traffic exchange. After receiving the PDP request message, the SGSN firstly queries the subscription list according to the APN of the mobile terminal included in the message, and determines whether an APN matching with the APN of the mobile terminal exists in the subscription list. If the APN matching with the APN of the mobile terminal is found, the information that indicates whether the APN supports the localized traffic exchange is obtained from the subscription list. The expression form of the information may be set by an operator, which is not limited in the embodiment of the present invention. For example, a flag is used to express the information; while the content and meaning of the flag may be set by the operator, which is not limited in the embodiment of the present invention. For example, the flag is set to 1bit, where "1" indicates that the APN supports the localized traffic exchange, and "0" indicates that the APN does not support the localized traffic exchange; or "0" indicates that the APN supports the localized traffic exchange, and "1" indicates that the APN does not support the localized traffic exchange.
303: The SGSN carries the information that indicates whether the APN of the mobile terminal supports the localized traffic exchange in the PDP activation request message and sends the PDP activation request message to a GGSN.
304: After receiving the PDP activation request message, the GGSN sends a PDP activation policy request message to a PCRF.
305: After receiving the PDP activation policy request message, the PCRF obtains the information that indicates whether the PDP of the mobile terminal supports the localized traffic exchange, carries the information that indicates whether the PDP of the mobile terminal supports the localized traffic exchange in a PDP activation policy response message, and returns the PDP activation policy response message to the GGSN.
   A policy information table is stored in the PCRF, and includes policy information of the terminal. The policy information includes the information that indicates whether the PDP of the mobile terminal supports the localized traffic exchange. The information that indicates whether the PDP supports the localized traffic control may be set at the PCRF by the operator according to the property of the APN when the PDP is defined. The expression form of the information may be set by the operator, which is not limited in the embodiment of the present invention. For example, a flag is used to express the information; while the content and meaning of the flag may be set by the operator, which is not limited in the embodiment of the present invention. For example, the flag is set to 1bit, where "1" indicates that the PDP supports the localized traffic exchange, and "0" indicates that the PDP does not support the localized traffic exchange; or "0" indicates that the PDP supports the localized traffic exchange, and "1" indicates that the PDP does not support the localized traffic exchange. When receiving the PDP activation policy request message, the PCRF acquires the policy information corresponding to the PDP of the mobile terminal, and obtains the information that indicates whether the PDP of the mobile terminal supports the localized traffic exchange.
306: The GGSN receives the PDP activation policy response message; according to the information that indicates whether the PDP of the mobile terminal supports the localized traffic exchange in the policy response message and the information, obtained in step 303, of whether the APN of the mobile terminal supports the localized traffic exchange, the GGSN determines whether the SGSN, an RNC and a NodeB are permitted to implement the localized traffic exchange; and if it is determined that the SGSN, the RNC and the NodeB are permitted to implement the localized traffic exchange, sends indication information to the SGSN, so as to enable the SGSN to implement the localized traffic exchange for the PDP of the mobile terminal according to the indication information and presetting of the SGSN.
307: The SGSN receives the indication information, and according to the presetting of the SGSN, determines whether the SGSN supports the localized traffic exchange. Whether the SGSN supports the localized traffic exchange may be set by the operator according to a specific policy when the SGSN is added, which is not limited in the embodiment of the present invention. If the SGSN supports the localized traffic exchange, the localized traffic control for the PDP of the mobile terminal may be implemented at the SGSN. That is, a localized traffic exchange table is established for the APN of the mobile terminal, an IP address and tunnel information of the mobile terminal corresponding to the PDP are added to the localized traffic exchange table, and step 308 is performed. If the SGSN does not support the localized traffic exchange, the PDP activation response message is processed according to the standard process in the prior art.
308: After executing the corresponding operation according to the indication information and the presetting of the SGSN, the SGSN sends the indication information to a traffic convergence node RNC in the next layer.
   That The SGSN sends the indication information to the RNC may be implemented by allocating an RAB to the RNC and carrying the indication information in the RAB allocation information. The embodiment of the present invention is not limited thereto, and that the SGSN sends the indication information to the RNC may also be implemented by directly sending a message that carries the indication information to the RNC. The embodiment of the present invention takes the implementation of carrying the indication information in the RAB allocation information as an example for illustration.
   The SGSN communicates with the RNC through an Iu interface. In the process of communication, the SGSN sends information to the RNC through an interface message. An optional information element is set in the interface message, and the indication information is encapsulated in the optional information element to be sent to the RNC.
309: After receiving the indication information, the RNC determines whether the RNC supports the localized traffic exchange according to the presetting of the RNC. Whether the RNC supports the localized traffic exchange may be set by the operator according to a specific policy when the RNC is added, which is not limited in the embodiment of the present invention. If the RNC supports the localized traffic exchange, the localized traffic exchange for the PDP of the mobile terminal may be implemented at the RNC. That is, a localized traffic exchange table is established for the APN of the mobile terminal, an IP address and encapsulation information of the RAB are added to the localized traffic exchange table, and step 310 is performed. If the RNC does not support the localized traffic exchange, the RAB allocation information is processed according to the standard process in the prior art.
310: After executing the corresponding operation according to the indication information and the presetting of the RNC, the RNC sends the indication information to a traffic convergence node NodeB in the next layer.
   That that RNC sends the indication information to the NodeB may be implemented by allocating an RB to the NodeB and carrying the indication information in the RB (Radio Bearer, radio bearer) allocation information. The embodiment of the present invention is not limited thereto, and that the RNC sends the indication information to the NodeB may also be implemented by directly sending a message that carries the indication information to the NodeB. The embodiment of the present invention takes the implementation of carrying the indication information in the RB allocation information as an example for illustration.
   The RNC communicates with the NodeB through an Iub interface. In the process of communication, the RNC sends information to the NodeB through an interface message, an optional information element is set in the interface message, and the indication information is encapsulated in the optional information element to be sent to the NodeB.
311: After receiving the RB allocation information, the NodeB determines whether the NodeB supports the localized traffic exchange according to the presetting of the NodeB. Whether the NodeB supports the localized traffic exchange may be set by the operator according to a specific policy when the NodeB is added, which is not limited in the embodiment of the present invention. If the NodeB supports the localized traffic exchange, the localized traffic exchange for the PDP of the mobile terminal may be implemented at the NodeB. That is, the NodeB establishes a localized traffic exchange table for the APN, and adds an IP address and encapsulation information of the RB to the localized traffic exchange table. If the NodeB does not support the localized traffic exchange, the RB information is processed according to the standard process in the prior art.

Through the foregoing steps, if the traffic convergence nodes, namely, the SGSN, the RNC and the NodeB support the localized traffic exchange, and the PDP and the APN also support the localized traffic exchange, the localized traffic exchange table may be established for the PDP of the mobile terminal at the SGSN, the RNC and the NodeB, so as to enable the PDP of the mobile terminal to implement the localized traffic exchange at the foregoing traffic convergence nodes.

Furthermore, when router updating, RB restoration and location reselection of the mobile terminal are performed, the indication information obtained by the GGSN is sent to the corresponding traffic convergence nodes, namely, the SGSN, the RNC and the NodeB after the router updating, the RB restoration and the location reselection of the mobile terminal are performed, and the traffic convergence nodes implement the foregoing corresponding steps, which are not repeated again in the embodiment of the present invention.

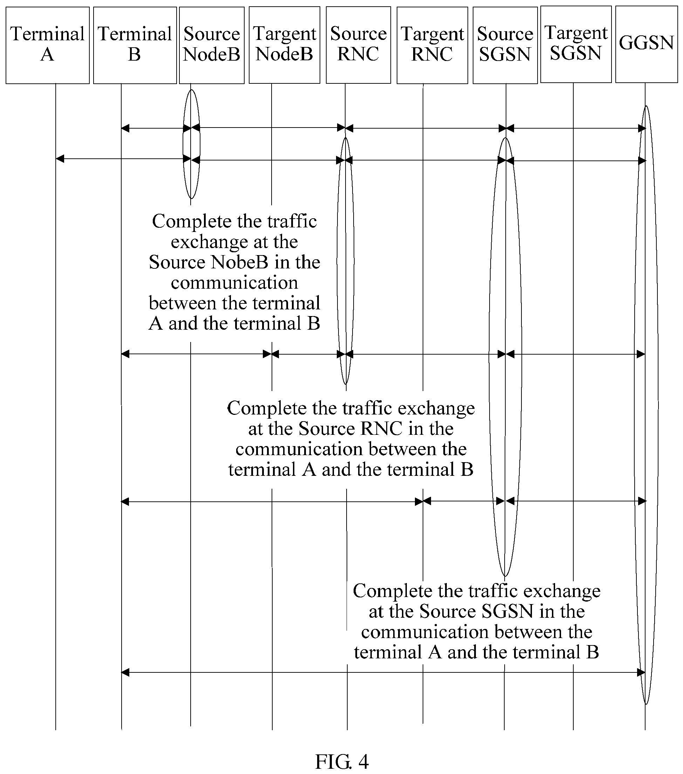

Furthermore, after the SGSN, the RNC and the NodeB establish the localized traffic exchange table for the PDP of the mobile terminal, the localized traffic exchange may be implemented by the foregoing traffic convergence nodes for the mobile terminal after movement. Specifically, as shown in FIG. 4, during a communication process of a terminal A with a terminal B, when the terminal A moves, assuming that the terminal B does not move, the terminal A sequentially moves to a Target NodeB, a Target RNC, and a Target SGSN with the expansion of the movement area, so that the terminal A and the terminal B sequentially perform the localized exchange through a Source NodeB, a Source RNC, and a Source SGSN, and finally perform routing exchange through an anchor point of the GGSN defined by the mobile wideband. In this process, no data terminal can be handed over completely and smoothly in the localized exchange between layers.

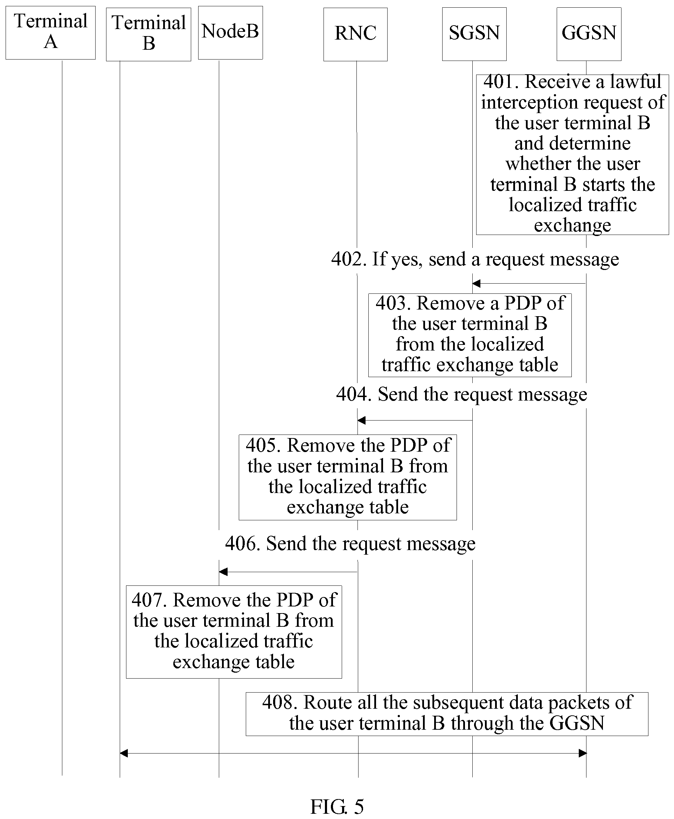

Furthermore, after the localized traffic exchange table is established for the PDP of the mobile terminal, lawful interception can still be implemented on the mobile terminal. For example, after the localized traffic exchange table is established for the PDP of the mobile terminal at the SGSN, the RNC and the NodeB, and when the localized traffic exchange is implemented at the NodeB in the communication between the terminal A and the terminal B, if the lawful interception needs to be performed on the terminal B, the specific implementation is shown in FIG. 5, including:
401: After receiving a lawful interception request for the terminal B, the GGSN determines whether the localized traffic exchange for the PDP of the terminal B is started, if the localized traffic exchange for the PDP of the terminal B is started, the GGSN performs step 402, and if the localized traffic exchange for the PDP of the terminal B is started, the GGSN implements the lawful interception on a data packet sent by the terminal B.
402: The GGSN sends a request message for canceling the localized traffic exchange for the PDP of the terminal B to the SGSN, where the request message includes the PDP information of the mobile terminal.
403: After receiving the request message, according to the PDP information of the terminal B, the SGSN removes the PDP of the terminal B from the localized traffic exchange table.
404: The SGSN sends the request message to the traffic convergence node RNC in the next layer that implements the localized traffic exchange for the PDP of the terminal.
405: After receiving the request message, according to the PDP information of the terminal B, the RNC removes the PDP of the terminal B from the localized traffic exchange table.
406: After removing the PDP of the terminal B from the localized traffic exchange table, the RNC sends the request message to the traffic convergence node NodeB in the next layer that implements the localized traffic exchange for the PDP of the terminal.
407: After receiving the request message, according to the PDP information of the terminal B, the NodeB removes the PDP of the terminal B from the localized traffic exchange table.
408: All the subsequent data packets of the terminal B are routed through the GGSN, so that the GGSN may complete the lawful interception on the terminal B.

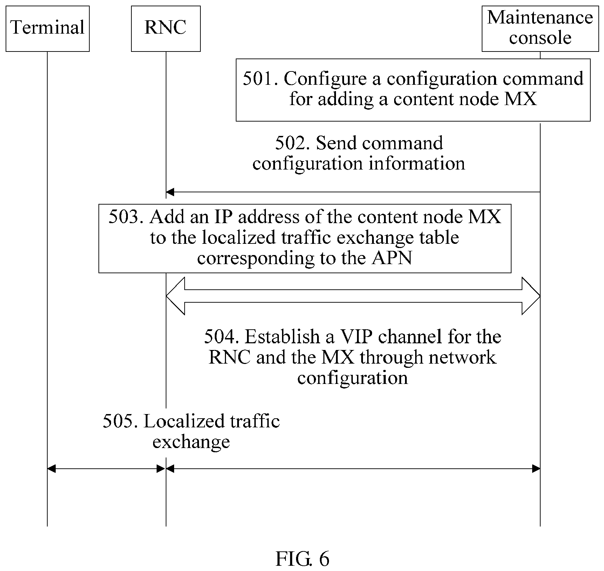

Furthermore, after the traffic convergence node in the network implements the localized traffic exchange for the PDP of the mobile terminal, to prevent that, when a newly-added content node communicates with the mobile terminal, the localized traffic exchange for the PDP of the mobile terminal needs to be implemented at the channel control node so as to implement the localized traffic exchange, the embodiment of the present invention further provides a corresponding method for adding a content node, for example, adding a content node MX that communicates with the terminal A through the RNC. Specifically, as shown in FIG. 6, the method includes:
501: Configure, at a maintenance console, a configuration command for adding the content node MX, such as Add Content IP: APN, IP ADDRESS = MX IP.
502: The maintenance console carries the configuration command in command configuration information and sends the command configuration information to the RNC.
503: After receiving the command configuration information, according to the APN of the content node MX included in the configuration command, the RNC adds an IP address of the content node MX to the localized traffic exchange table of the APN corresponding to the APN of the MX.
504: Establish a VIP channel for the RNC and the MX through network configuration.
505: Complete the traffic exchange between the terminal A and the MX at the RNC through the localized traffic exchange.

In the embodiment of the present invention, the function of supporting the localized traffic exchange is added in the traffic convergence nodes, namely, the SGSN, the RNC and the NodeB. When it is determined that the traffic convergence node supports the localized traffic exchange, and the APN and the PDP of the terminal also support the localized traffic exchange, the localized traffic exchange for the terminal is implemented at the traffic convergence node. Compared with the prior art, the implementation of the localized traffic exchange does not move any network element already existing in the mobile wideband network or add any new device, but adds, in the traffic convergence node which is originally only used to converge traffic, merely the function of supporting the localized traffic exchange. When the condition of the localized traffic exchange is satisfied, the localized traffic exchange is implemented, the original network architecture is maintained, and the drawbacks of the complication of the traffic transmission and the high operating costs caused by changing of the original network architecture are prevented. Therefore, the localized traffic exchange is implemented while the original network architecture, the network complexity and the operating costs are maintained.

The localized traffic exchange provided by the embodiment of the present invention may be handed over smoothly between exchange in layers and the GGSN routing. The traffic transmission is not interrupted in the handover process, and the performance of the system is improved.

Furthermore, when the localized traffic exchange table is established for the PDP at the traffic convergence nodes, namely, the SGSN, the RNC and the NodeB, if the traffic convergence nodes, namely, the SGSN, the RNC and the NodeB support the localized traffic exchange, the localized traffic exchange table is established, and if the traffic convergence nodes do not support the localized traffic exchange, the localized traffic exchange table is not established, so that the localized traffic exchange can be dynamically controlled, compatible with any network element that does not support the localized traffic exchange, and easy to deploy and standardize.

Furthermore, the traffic convergence nodes that perform the localized traffic exchange need to complete only the collection and reporting of the traffic, and do not need to implement a complex charging function. Therefore, the functions of charging and lawful interception of services implementing the localized traffic exchange may not be affected.

The foregoing embodiment aims at the specific steps of the technical solution implemented in a WCDMA network. When the technical solution is implemented in a Femto Cell network, the execution of the steps is similar to that of the steps in the WCDMA network. The difference is that, the RNC is replaced with a Femto AG and the NodeB is replaced with a Femto AP. The execution of the steps in FIG. 3A, FIG 3B, FIG. 4, FIG. 5 and FIG. 6 may be referred to for the specific steps, which are not repeated herein.

### Embodiment 3

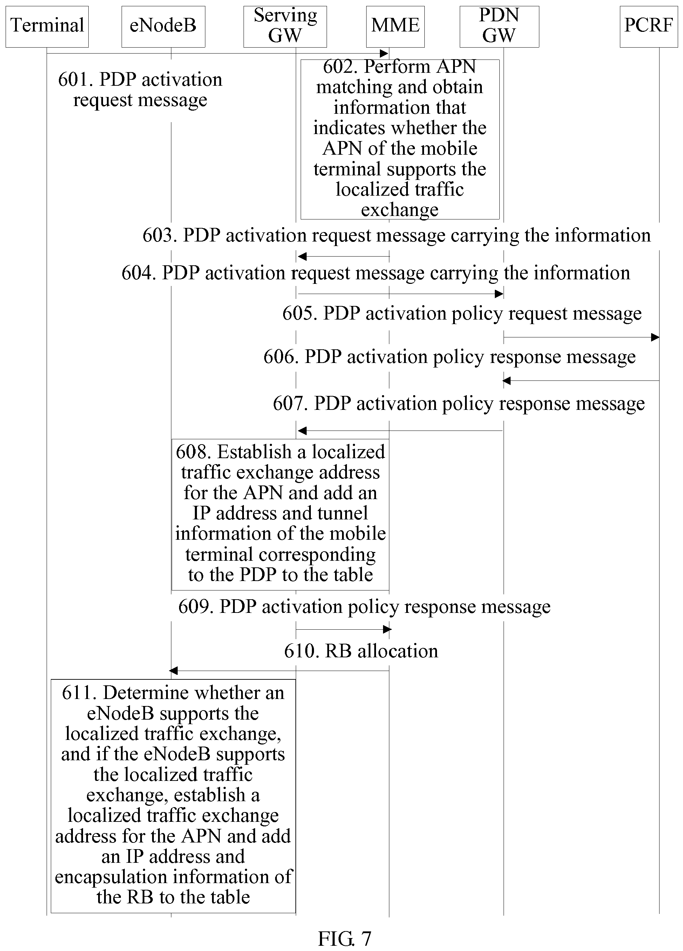

An embodiment of the present invention provides a method for controlling a localized traffic exchange in a mobile wideband network. The embodiment of the present invention takes the implementation in an LTE or an SAE network and in PDP activation as an example to illustrate in detail a method for controlling a localized traffic exchange in a mobile wideband network. As shown in FIG. 7, the method includes:
601: A mobile terminal sends a PDP activation request message to an MME, where the PDP activation request message includes an APN of the terminal.
602: The MME receives the PDP activation request message, and according to the APN of the mobile terminal included in the message, the MME queries whether an APN matching with the APN of the mobile terminal exists in the subscription list. When it is found that the APN matching with the APN of the mobile terminal exists in the subscription list, the MME obtains the information that indicates whether the APN of the mobile terminal supports the localized traffic exchange.
   The subscription list, stored in the MME, includes the APN and the information that indicates whether the APN supports the localized traffic exchange. After receiving the PDP request message, the MME firstly queries the subscription list according to the APN of the mobile terminal included in the message, and determines whether an APN matching with the APN of the mobile terminal exists in the subscription list. If the APN matching with the APN of the mobile terminal is found, the information that indicates whether the APN supports the localized traffic exchange is obtained. The information that indicates whether the APN supports the localized traffic exchange may be set at an HSS by an operator according to the property of the APN when the APN is defined, and obtained by requesting, by the MME, to the HSS. The obtained information is added in the subscription list of the MME. The expression form of the information may be set by the operator, which is not limited in the embodiment of the present invention. For example, a flag is used to express the information; while the content and meaning of the flag may be set by the operator, which is not limited in the embodiment of the present invention. For example, the flag is set to 1bit, where "1" indicates that the APN supports the localized traffic exchange, and "0" indicates that the APN does not support the localized traffic exchange; or "0" indicates that the APN supports the localized traffic exchange, and "1" indicates that the APN does not support the localized traffic exchange.
603: The MME carries the information that indicates whether the APN of the mobile terminal supports the localized traffic exchange in the PDP activation request message and sends the PDP activation request message to a Serving GW.
604: After receiving the PDP activation request message, the Serving GW forwards the message to a PND GW.
605: After receiving the PDP activation request message, the PND GW sends a PDP activation policy request message to a PCRF.
606: After receiving the PDP activation policy request message, the PCRF obtains the information that indicates whether the PDP of the mobile terminal supports the localized traffic exchange, carries the information in a PDP activation policy response message, and returns the PDP activation policy response message to the PND GW.
   A policy information table is stored in the PCRF, and includes policy information of the terminal. The policy information includes the information that indicates whether the PDP of the mobile terminal supports the localized traffic exchange. The information that indicates whether the PDP of the mobile terminal supports the localized traffic control may be set at the PCRF by the operator according to the property of the APN when the PDP is defined. The expression form of the information may be set by the operator, which is not limited in the embodiment of the present invention. For example, a flag is used to express the information; while the content and meaning of the flag may be set by the operator, which is not limited in the embodiment of the present invention. For example, the flag is set to 1bit, where "1" indicates that the PDP supports the localized traffic exchange, and "0" indicates that the PDP does not support the localized traffic exchange; or "0" indicates that the PDP supports the localized traffic exchange, and "1" indicates that the PDP does not support the localized traffic exchange. When receiving the PDP activation policy request message, the PCRF acquires the policy information corresponding to the PDP according to the PDP, and obtains the information that indicates whether the PDP of the mobile terminal supports the localized traffic exchange.
607: The PND GW receives the PDP activation policy response message; according to the information that indicates whether the PDP of the mobile terminal supports the localized traffic exchange in the policy response message and the information, obtained in step 602, of whether the APN of the mobile terminal supports the localized traffic exchange, the PND GW determines whether the Serving GW and an eNodeB are permitted to implement the localized traffic exchange; and if it is determined that the Serving GW and the eNodeB are permitted to implement the localized traffic exchange, the PND GW sends indication information to the Serving GW, so as to enable the Serving GW to implement the localized traffic exchange for the PDP of the mobile terminal according to the indication information and presetting of the Serving GW.
608: The Serving GW receives the indication information, and according to the presetting of the Serving GW, determines whether the Serving GW supports the localized traffic exchange. Whether the Serving GW supports the localized traffic exchange may be set by the operator according to a specific policy when the Serving GW is added, which is not limited in the embodiment of the present invention. If the Serving GW supports the localized traffic exchange, the localized traffic exchange for the PDP of the mobile terminal may be implemented at the Serving GW. That is, a localized traffic exchange table is established for the APN of the mobile terminal, an IP address and tunnel information of the mobile terminal corresponding to the PDP are added to the localized traffic exchange table, and step 609 is performed. If the Serving GW does not support the localized traffic exchange, the PDP activation response message is processed according to the standard process in the prior art.
609: The Serving GW forwards the PDP activation response message to the MME, where the PDP activation response message includes the indication information.
610: After receiving the PDP activation response message, the MME sends the indication information to the eNodeB.
   That the MME sends the indication information to the eNodeB may be implemented by allocating an RB (Radio Bearer, radio bearer) to the eNodeB and carrying the indication information in the RB allocation information. The embodiment of the present invention is not limited thereto, and that the MME sends the indication information to the eNodeB may also be implemented by directly sending a message that carries the indication information to the eNodeB. The embodiment of the present invention takes the implementation of carrying the indication information in the RB allocation information as an example for illustration.
611: After receiving the RB allocation information, the eNodeB determines whether the eNodeB supports the localized traffic exchange according to the presetting of the eNodeB. Whether the eNodeB supports the localized traffic exchange may be set by the operator according to a specific policy when the eNodeB is added, which is not limited in the embodiment of the present invention. If the eNodeB supports the localized traffic exchange, the localized traffic exchange for the PDP of the mobile terminal may be implemented at the eNodeB. That is, the localized traffic exchange table is established for the APN of the mobile terminal, and an IP address and encapsulation information of the RB are added to the localized traffic exchange table. If the eNodeB does not support the localized traffic exchange, the RB allocation information is processed according to the standard process in the prior art.

In the embodiment of the present invention, the function of supporting the localized traffic exchange is added to the traffic convergence nodes, namely, the SGSN and the eNodeB. When it is determined that the traffic convergence node supports the localized traffic exchange, and the APN and the PDP of the mobile terminal also support the localized traffic exchange, the localized traffic exchange for the terminal is implemented at the traffic convergence node. Compared with the prior art, the implementation of the localized traffic exchange does not move any network element already existing in the mobile wideband network or add any new device, but adds, in the traffic convergence node which is originally only used to converge traffic, merely the function of supporting the localized traffic exchange. When the condition of the localized traffic exchange is satisfied, the localized traffic exchange is implemented, the original network architecture is maintained, and the drawbacks of the complication of the traffic transmission and the high operating costs caused by changing of the original network architecture are prevented. Therefore, the localized traffic exchange is implemented while the original network architecture, the network complexity, and the operating costs are maintained.

### Embodiment 4

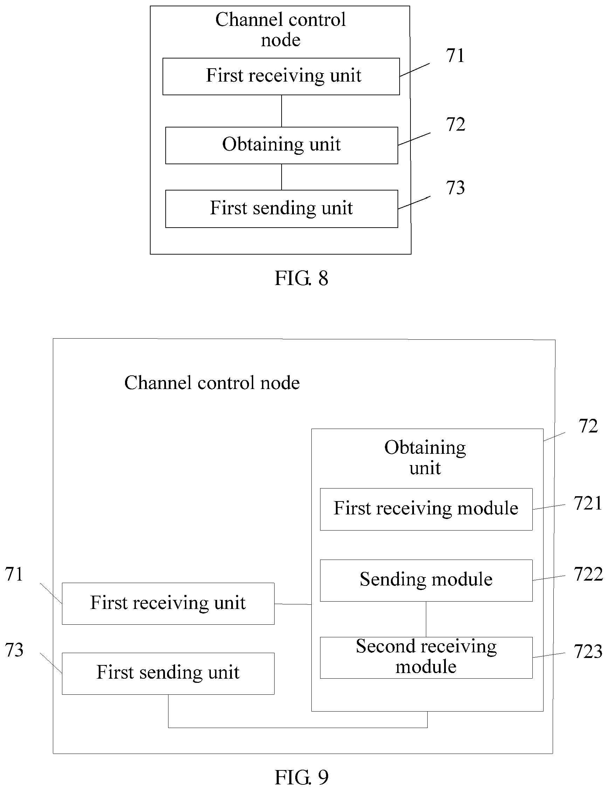

An embodiment of the present invention provides a channel control node. When the channel control node is in a WCDMA or a Femto Cell network, the gateway node is a GGSN; while in an LET or an SEA network, the channel control node is a PDN-GW, which are not limited in the embodiment of the present invention. In other networks, the channel control node is a node sharing the same function with the foregoing node. As shown in FIG. 8, the channel control node includes: a first receiving unit 71, an obtaining unit 72 and a first sending unit 73.

The first receiving unit 71 is configured to receive an access request of a mobile terminal. The access request may be, but not limited to, a call request, an activation request and a data transmission request.

The obtaining unit 72 is configured to obtain condition information that indicates whether a traffic convergence node on a link corresponding to the access request is permitted to implement localized traffic exchange. The condition information includes: information that indicates whether an APN of the mobile terminal supports the localized traffic control and information that indicates whether a PDP of the mobile terminal supports the localized traffic control. The information that indicates whether the APN supports the localized traffic control may be set by an operator according to the property of the APN when the APN is defined. In a WCDMA or a Femto Cell network, the information is set at an HLR; while in an LET or an SEA network, the information is set at an HSS, and obtained by requesting, by a mobility network element control node, to the HLR or the HSS. The obtained information is added to a subscription list of the mobility network element control node. The information that indicates whether the PDP supports the localized traffic control may be set at a PCRF by the operator according to the property of the APN when the PDP is defined.

The first sending unit 73 is configured to send indication information to the traffic convergence node on the link corresponding to the access request when the condition information obtained by the obtaining unit 72 is that the traffic convergence node on the link corresponding to the access request is permitted to implement the localized traffic exchange, so as to enable the traffic convergence node that is permitted to implement the localized traffic exchange on the link corresponding to the access request and a subsequent traffic convergence node to implement the localized traffic exchange in response to the access request according to the indication information and presetting of the traffic convergence node and the subsequent traffic convergence node.

When the condition information obtained by the obtaining unit 72 is that the APN of the mobile terminal supports the localized traffic control, and the PDP of the mobile terminal supports the localized traffic control, it is determined that the traffic convergence node on the link corresponding to the access request is permitted to implement the localized traffic exchange. When the condition information obtained by the obtaining unit 72 is that the APN of the mobile terminal or the PDP of the mobile terminal does not support the localized traffic exchange, it is determined that the traffic convergence node on the link corresponding to the access request is not permitted to implement the localized traffic exchange. Furthermore, after the mobile terminal accesses the network successfully, the determination of whether the traffic convergence node on the link corresponding to the access request is permitted to implement the localized traffic exchange not only includes the determination based on the foregoing condition information, but also includes the determination of whether the mobile terminal is in a process of lawful interception. If the mobile terminal is under lawful interception, even if both of the foregoing two conditions are satisfied, the traffic convergence node on the link of the access request may not be permitted to implement the localized traffic exchange, because the traffic of the mobile terminal, to which the lawful interception needs to be performed, must be exchanged at the channel control node, so as to implement the lawful interception on the mobile terminal.

When the indication information that the traffic convergence node is permitted to implement the localized traffic exchange is delivered, because of the architecture of the mobile wideband network, the indication information needs to be sent to the corresponding traffic convergence node on a communication link layer by layer. That is, firstly the indication information is sent to the traffic convergence node on the link corresponding to the access request, and after the traffic convergence node on the link corresponding to the access request receives the indication information, the indication information is delivered to the subsequent traffic convergence node layer by layer, so as to enable the subsequent traffic convergence node to implement the localized traffic exchange in response to the access request according to the indication information and the presetting of the subsequent traffic convergence node. For example, in a WCDMA, the channel control node is a GGSN, the traffic convergence node on the link corresponding to the access request is an SGSN, the subsequent traffic convergence node in the next layer of the SGSN is an RNC, while the subsequent traffic convergence node in the next layer of the RNC is a NodeB, and the NodeB is the traffic convergence node in the bottom layer on the communication link of the mobile terminal. The process of sending the indication information to the traffic convergence node is that, the GGSN sends the indication information to the SGSN; after receiving the indication information sent by the GGSN, the SGSN sends the indication information to the RNC; and after receiving the indication information sent by the SGSN, the RNC sends the indication information to the NodeB.

Furthermore, as shown in FIG. 9, the obtaining unit 72 includes: a first receiving module 721, a sending module 722 and a second receiving module 723.

The first receiving module 721 is configured to receive activation request information sent by the mobility network element control node, where the activation request information includes the information that indicates whether the APN of the mobile terminal supports the localized traffic control, which is obtained from the HLR by the mobility network element control node.

The sending module 722 is configured to send a PDP policy request of the mobile terminal to the PCRF.

The second receiving module 723 is configured to receive PDP policy response information returned by the PCRF, where the response information includes the information that indicates whether the PDP of the mobile terminal supports the localized traffic control.

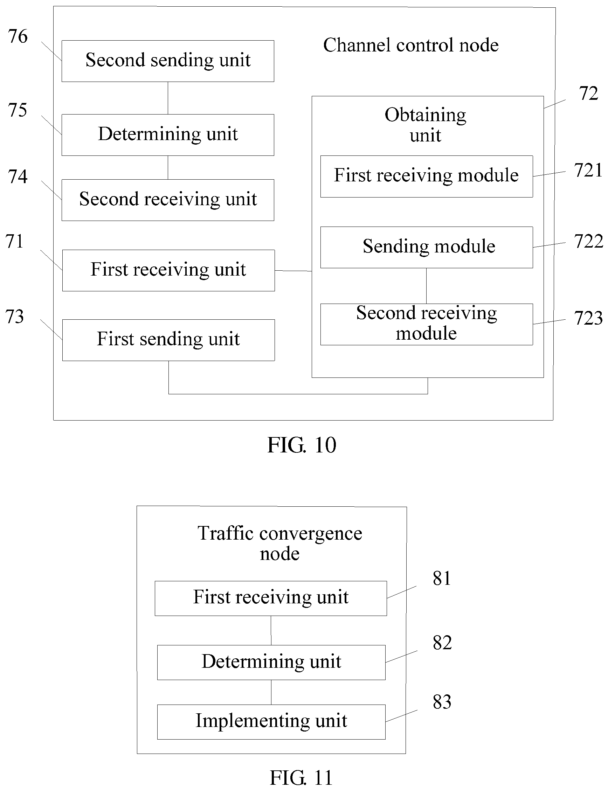

Furthermore, after the traffic convergence node in the network implements the localized traffic exchange for the PDP of the mobile terminal, the embodiment of the present invention further provides a corresponding device for performing the lawful interception on the mobile terminal. As shown in FIG. 10, the channel control node further includes: a second receiving unit 74, a determining unit 75 and a second sending unit 76.

The second receiving unit 74 is configured to receive a request for lawful interception on the mobile terminal.

The determining unit 75 is configured to determine whether the localized traffic exchange for the PDP of the mobile terminal is started.

The second sending unit 76 is configured to: when the determining unit 75 determines that the localized traffic exchange for the PDP of the mobile terminal is started, send a request message for canceling the localized traffic exchange for the PDP of the mobile terminal to the traffic convergence node that implements the localized traffic exchange for the PDP of the mobile terminal, where the request message includes the PDP information of the mobile terminal. When the request message for canceling the localized traffic exchange for the mobile terminal is delivered to the corresponding traffic convergence node, the request message is also delivered layer by layer according to different network architecture, so as to cancel the localized traffic exchange of the corresponding traffic convergence node for the mobile terminal. The description of the corresponding content in Embodiment 2 may be referred to for the delivering process, which is not repeated herein.

The embodiment of the present invention further provides a traffic convergence node. The traffic convergence node is in a mobile wideband bearer link through which the mobile terminal accesses a data network. The traffic convergence node varies with the applied network. For example, in a WCDMA or a Femto Cell network, the traffic convergence nodes on the communication link from the bottom layer to the upper layer sequentially are a NodeB, an RNC and an SGSN; while in an LTE or an SAE network, the traffic convergence nodes on the communication link from the bottom layer to the upper layer sequentially are a NodeB and a Svering GW, which are not limited in the embodiment of the present invention. In other networks, the traffic convergence node is a node sharing the same function with the foregoing node. As shown in FIG. 11, the traffic convergence node includes: a first receiving unit 81, a determining unit 82 and an implementing unit 83.

The first receiving unit 81 is configured to receive indication information used to indicate that the traffic convergence node is permitted to implement the localized traffic exchange.

The determining unit 82 is configured to determine whether the traffic convergence node supports the localized traffic exchange according to the presetting of the traffic convergence node. Whether the traffic convergence node supports the localized traffic exchange may be set by the operator according to a specific policy when the traffic convergence node is added, which is not limited in the embodiment of the present invention.

The implementing unit 83 is configured to implement the localized traffic exchange according to the indication information when the determining unit 82 determines that the traffic convergence node supports the localized traffic exchange.

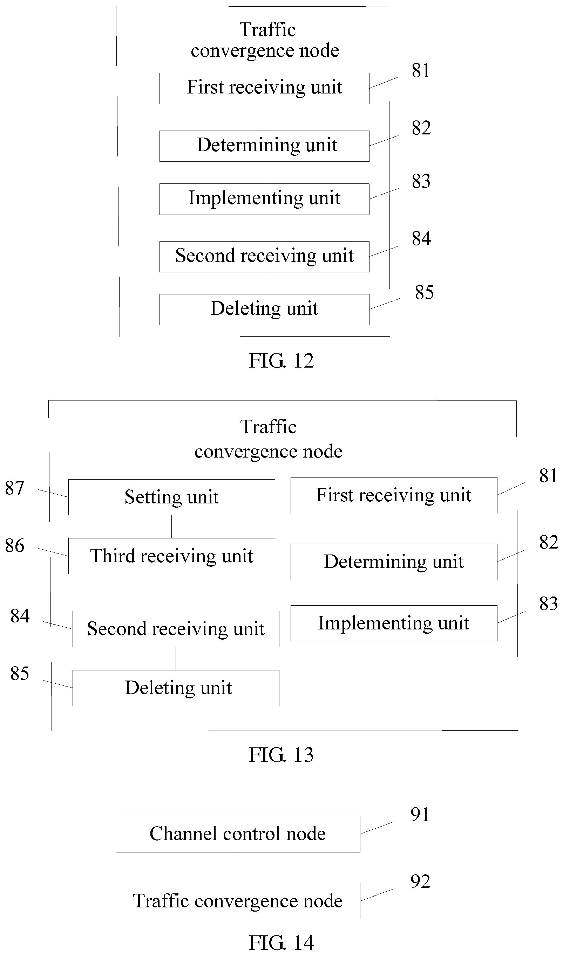

Furthermore, after the traffic convergence node in the network implements the localized traffic control for the PDP of the mobile terminal, if the lawful interception needs to be performed on the mobile terminal, the embodiment of the present invention further provides a corresponding device. As shown in FIG. 12, the traffic convergence node further includes: a second receiving unit 84 and a deleting unit 85.

The second receiving unit 84 is configured to receive the request message for canceling the localized traffic exchange for the PDP of the mobile terminal, where the request message includes the PDP information of the mobile terminal.

The deleting unit 85 is configured to cancel the localized traffic exchange of the traffic convergence node for the PDP of the mobile terminal according to the PDP information of the mobile terminal received by the second receiving unit 84.

Furthermore, after the traffic convergence node in the network implements the localized traffic exchange for the PDP of the mobile terminal, to prevent that, when a newly-added content node communicates with the mobile terminal, the localized traffic exchange for the PDP of the mobile terminal needs to be implemented at the channel control node so as to implement the localized traffic exchange, the embodiment of the present invention further provides a corresponding device. As shown in FIG. 13, the traffic convergence node further includes: a third receiving unit 86 and a setting unit 87.

The third receiving unit 86 is configured to receive command configuration information for adding a content node. The command configuration information may be specifically set by an administrator at a maintenance console, which is not limited in the embodiment of the present invention. For example, a content node MX is added beside the RNC, and the configuration command thereof is: Add Content IP: APN, IP ADDRESS = MX IP.

The setting unit 87 is configured to set the content node according to the command configuration information received by the third receiving unit 86.

The embodiment of the present invention further provides a system for controlling a localized traffic exchange in a mobile wideband network. As shown in FIG. 14, the system includes: a channel control node 91 and a traffic convergence node 92.

The channel control node 91 is configured to receive an access request of a mobile terminal, obtain condition information that indicates whether the traffic convergence node 92 on a link corresponding to the access request is permitted to implement localized traffic exchange; if the condition information is that the traffic convergence node on the link corresponding to the access request is permitted to implement the localized traffic exchange, send indication information to the traffic convergence node 92 on the link corresponding to the access request, so as to enable the traffic convergence node that is permitted to implement the localized traffic exchange on the link corresponding to the access request and a subsequent traffic convergence node to implement the localized traffic exchange in response to the access request according to the indication information and presetting of the traffic convergence node and the subsequent traffic convergence node. When the channel control node 91 is in a WCDMA or a Femto Cell network, the gateway node is a GGSN; while in an LET or an SEA network, the channel control node is a PDN-GW, which is not limited in the embodiment of the present invention. In other networks, the channel control node is a node sharing the same function with the foregoing node.

The traffic convergence node 92 is configured to receive the indication information used to indicate that the traffic convergence node is permitted to implement the localized traffic exchange; determine whether the traffic convergence node 92 supports the localized traffic exchange according to the presetting of the traffic convergence node 92; and if it is determined that the traffic convergence node 92 supports the localized traffic exchange, implement the localized traffic exchange according to the indication information. The traffic convergence node 92 varies with different network architecture. For example, in a WCDMA or a Femto Cell network, the traffic convergence nodes on the communication link from the bottom layer to the upper layer sequentially are a NodeB, an RNC and an SGSN; while in an LTE or an SAE network, the traffic convergence nodes on the communication link from the bottom layer to the upper layer sequentially are a NodeB and a Svering GW, which is not limited to the embodiment of the present invention. In other networks, the traffic convergence node is a node sharing the same function with the foregoing node.

In the embodiment of the present invention, when the access request of the mobile terminal is received, the traffic convergence node on the link corresponding to the access request supports the localized traffic exchange, and the condition information that the traffic convergence node on the link corresponding to the access request is permitted to implement the localized traffic exchange is obtained, the localized traffic exchange in response to the access request of the mobile terminal is implemented at the traffic convergence node. Compared with the prior art, the implementation of the localized traffic exchange does not move any network element already existing in the network or add any new device, but adds, in the traffic convergence node which is originally only used to converge traffic, merely the function of supporting the localized traffic exchange. When the condition of the localized traffic exchange is satisfied, the localized traffic exchange is implemented, the original network architecture is maintained, and the drawbacks of the complication of the traffic transmission and the high operating costs caused by changing of the original network architecture are prevented. Therefore, the localized traffic exchange is implemented while the original network architecture, the network complexity and the operating costs are maintained.

Besides, the localized traffic exchange provided by the embodiment of the present invention may be handed over smoothly between exchange in layers and the route of the channel control node. The traffic transmission is not interrupted in the handover process, and the performance of the system is improved.

Furthermore, when the localized traffic exchange table is established for the PDP at the traffic convergence nodes, if the traffic convergence nodes support the localized traffic exchange, the localized traffic exchange table is established, and if the traffic convergence nodes do not support the localized traffic exchange, the localized traffic exchange table is not established, so that the localized traffic exchange can be dynamically controlled, compatible with any network element that does not support the localized traffic exchange, and easy to deploy and standardize.

Furthermore, the traffic convergence nodes that perform the localized traffic exchange are only required to complete the collection and reporting of the traffic, and do not need to implement a complex charging function. Therefore, the functions of charging and lawful interception of services implementing the localized traffic exchange may not be affected.

Through the above description of the embodiments, it is clear to persons skilled in the art that the present invention may be accomplished by software plus necessary universal hardware, and definitely may also be accomplished by hardware, but in many cases, the software implementation is preferred. Based on this, the technical solutions of the present invention or the part that makes contributions to the prior art can be substantially embodied in the form of a software product. The computer software product is stored in a readable storage medium, for example, a floppy disk, hard disk, or optical disk of the computer, and contains several instructions used to instruct computer equipment (for example, a personal computer, a server, or network equipment) to perform the methods according to the embodiments of the present invention.

In conclusion, the above are merely specific implementation modes of the present invention. However, the protection scope of the present invention is not limited thereto. Changes or replacements readily apparent to a person skilled in the prior art within the technical scope of the present invention should fall within the scope of the present invention. Therefore, the protection scope of the present invention is subject to the protection scope of the claims.

## Claims

1. A method, implemented by a channel control node, for controlling a localized traffic exchange in a mobile wideband network, comprising:
receiving (101) an access request of a mobile terminal, and obtaining condition information that indicates whether a traffic node on a link corresponding to the access request is permitted to implement the localized traffic exchange; and
if the condition information is that the traffic node on the link corresponding to the access request is permitted to implement the localized traffic exchange, sending (102) indication information to the traffic node on the link corresponding to the access request, so as to enable the traffic node that is permitted to implement the localized traffic exchange on the link corresponding to the access request and a subsequent traffic node to implement the localized traffic exchange in response to the access request according to the indication information and presetting of the traffic node and the subsequent traffic node;
wherein the condition information comprises:
information that indicates whether an access point name, APN, of the mobile terminal supports localized traffic control and information that indicates whether a packet data protocol, PDP, of the mobile terminal supports the localized traffic control; and
if the condition information is that the traffic node on the link corresponding to the access request is permitted to implement the localized traffic exchange, the sending the indication information to the traffic node on the link corresponding to the access request comprises: if the condition information is that the APN of the mobile terminal supports the localized traffic control and the PDP of the mobile terminal supports the localized traffic control, sending the indication information to the traffic node on the link corresponding to the access request.
**characterized in that** the obtaining the condition information that indicates whether the traffic node on the link corresponding to the access request is permitted to implement the localized traffic exchange comprises:
receiving activation request information sent by a mobility network element control node, wherein the activation request information comprises the information that indicates whether the APN of the mobile terminal supports the localized traffic control; and
sending a PDP policy request of the mobile terminal to a policy charging and control rules function, PCRF, and receiving PDP policy response information returned by the PCRF, wherein the response information comprises the information that indicates whether the PDP of the mobile terminal supports the localized traffic control;
wherein the implementing, by the traffic node that is permitted to implement the localized traffic exchange on the link corresponding to the access request and the subsequent traffic node, the localized traffic exchange in response to the access request according to the indication information and the presetting of the traffic node and the subsequent traffic node comprises:
implementing, by the traffic node that is permitted to implement the localized traffic exchange on the link corresponding to the access request and the subsequent traffic node, the localized traffic exchange for the PDP of the mobile terminal according to the indication information and the presetting of the traffic node and the subsequent traffic node.

2. The method according to claim 1, further comprising:
after the traffic node on the link corresponding to the access request receives the indication information, delivering the indication information to the subsequent traffic node layer by layer, so as to enable the subsequent traffic node to implement the localized traffic exchange in response to the access request according to the indication information and the presetting of the subsequent traffic node.

3. A method, implemented by a traffic node, for controlling a localized traffic exchange in a mobile wideband network, comprising:
receiving (201) indication information used to indicate that a traffic node is permitted to implement the localized traffic exchange;
determining (202) whether the traffic node supports the localized traffic exchange according to presetting of the traffic node; and
if it is determined that the traffic node supports the localized traffic exchange, implementing (203) the localized traffic exchange according to the indication information.
**characterized in that** the method further comprises:
after a PDP of a mobile terminal implements the localized traffic exchange, when lawful interception needs to be performed on the mobile terminal, receiving a request message for canceling the localized traffic exchange for the PDP of the mobile terminal, wherein the request message comprises PDP information of the mobile terminal; and
canceling the localized traffic exchange of the traffic node for the PDP of the mobile terminal according to the PDP information of the mobile terminal.

4. A channel control node, comprising:
a first receiving unit (71), configured to receive an access request of a mobile terminal;
an obtaining unit (72), configured to obtain condition information that indicates whether a traffic node on a link corresponding to the access request is permitted to implement localized traffic exchange; and
a first sending unit (73), configured to send indication information to the traffic node on the link corresponding to the access request when the condition information obtained by the obtaining unit is that the traffic node on the link corresponding to the access request is permitted to implement the localized traffic exchange, so as to enable the traffic node that is permitted to implement the localized traffic exchange on the link corresponding to the access request and a subsequent traffic node to implement the localized traffic exchange in response to the access request according to the indication information and presetting of the traffic node and the subsequent traffic node;
wherein the condition information comprises:
information that indicates whether an APN of the mobile terminal supports the localized traffic control and information that indicates whether a PDP of the mobile terminal supports the localized traffic control; and
the first sending unit (73) is configured to send indication information to the traffic node on the link corresponding to the access request when the condition information obtained by the obtaining unit is that the APN of the mobile terminal supports the localized traffic control, and the PDP of the mobile terminal supports the localized traffic control;
**characterized in that** the obtaining unit comprises:
a first receiving module (721), configured to receive activation request information sent by a mobility network element control node, wherein the activation request information comprises the information that indicates whether an APN of the mobile terminal supports the localized traffic control;
a sending module (722), configured to send a PDP policy request of the mobile terminal to a PCRF; and
a second receiving module (723), configured to receive PDP policy response information returned by the PCRF, wherein the response information comprises the information that indicates whether the PDP of the mobile terminal supports the localized traffic control.

5. The channel control node according to claim 4, further comprising:
a second receiving unit (74), configured to receive a request for lawful interception on the mobile terminal;
a determining unit (75), configured to determine whether the localized traffic exchange for the PDP of the mobile terminal is started; and
a second sending unit (76), configured to: when the determining unit determines that the localized traffic exchange for the PDP of the mobile terminal is started, send a request message for canceling the localized traffic exchange for the PDP of the mobile terminal to the traffic node that implements the localized traffic exchange for the PDP of the mobile terminal, wherein the request message comprises PDP information of the mobile terminal.

6. A traffic node, comprising:
a first receiving unit (81), configured to receive indication information used to indicate that the traffic node is permitted to implement localized traffic exchange;
a determining unit (82), configured to determine whether the traffic node supports the localized traffic exchange according to presetting of the traffic node; and
an implementing unit (83), configured to implement the localized traffic exchange according to the indication information when the determining unit determines that the traffic node supports the localized traffic exchange;
**characterized in that** the traffic node further comprises:
a second receiving unit (84), configured to, after a PDP of a mobile terminal implements the localized traffic exchange, when lawful interception needs to be performed on the mobile terminal, receive a request message for canceling the localized traffic exchange for the PDP of the mobile terminal, wherein the request message comprises PDP information of the mobile terminal; and
a deleting unit (85), configured to cancel the localized traffic exchange of the traffic node for the PDP of the mobile terminal according to the PDP information of the mobile terminal received by the second receiving unit.

7. The traffic node according to claim 6, further comprising:
a third receiving unit (86), configured to receive command configuration information for adding a content node; and
a setting unit (87), configured to set the content node according to the command configuration information received by the third receiving unit.

8. A system for controlling a localized traffic exchange in a mobile wideband network, comprising:
a channel control node (91) according to claim 4; and
a traffic node (92) according to claim 6.

## Patentansprüche

1. Verfahren, das durch einen Kanalsteuerknoten implementiert wird, zum Steuern eines lokalisierten Verkehrsaustausches in einem Breitband-Mobilnetz, umfassend:
Empfangen (101) einer Zugangsanforderung eines mobilen Endgeräts und Erhalten von Bedingungsinformationen, die angeben, ob einem Verkehrsknoten auf einer Verbindung, die der Zugangsanforderung entspricht, erlaubt ist, den lokalisierten Verkehrsaustausch zu implementieren; und
falls die Bedingungsinformationen lauten, dass dem Verkehrsknoten auf der Verbindung, die der Zugangsanforderung entspricht, erlaubt ist, den lokalisierten Verkehrsaustausch zu implementieren, Senden (102) von Angabeinformationen zum Verkehrsknoten auf der Verbindung, die der Zugangsanforderung entspricht, um den Verkehrsknoten, dem erlaubt ist, den lokalisierten Verkehrsaustausch auf der Verbindung, die der Zugangsanforderung entspricht, zu implementieren, und einen nachfolgenden Verkehrsknoten zu aktivieren, so dass der lokalisierte Verkehrsaustausch als Reaktion auf die Zugangsanforderung gemäß den Angabeinformationen und der Voreinstellung des Verkehrsknotens und des nachfolgenden Verkehrsknotens implementiert wird;
wobei die Bedingungsinformationen Folgendes umfassen:
Informationen, die angeben, ob ein Zugangspunktname, APN, des mobilen Endgeräts eine lokalisierte Verkehrssteuerung unterstützt, und Informationen, die angeben, ob ein Paketdatenprotokoll, PDP, des mobilen Endgeräts die lokalisierte Verkehrssteuerung unterstützt; und
falls die Bedingungsinformationen lauten, dass dem Verkehrsknoten auf der Verbindung, die der Zugangsanforderung entspricht, erlaubt ist, den lokalisierten Verkehrsaustausch zu implementieren, das Senden der Angabeinformationen zum Verkehrsknoten auf der Verbindung, die der Zugangsanforderung entspricht, falls die Bedingungsinformationen lauten, dass der APN des mobilen Endgeräts die lokalisierte Verkehrssteuerung unterstützt und das PDP des mobilen Endgeräts die lokalisierte Verkehrssteuerung unterstützt, Senden der Angabeinformationen zum Verkehrsknoten auf der Verbindung, die der Zugangsanforderung entspricht, umfasst,
**dadurch gekennzeichnet, dass** das Erhalten der Bedingungsinformationen, die angeben, ob dem Verkehrsknoten auf der Verbindung, die der Zugangsanforderung entspricht, erlaubt ist, den lokalisierten Verkehrsaustausch zu implementieren, Folgendes umfasst:
Empfangen von Aktivierungsanforderungsinformationen, die durch einen Mobilitätsnetzwerkelement-Steuerknoten gesendet werden, wobei die Aktivierungsanforderungsinformationen die Informationen umfassen, die angeben, ob der APN des mobilen Endgeräts die lokalisierte Verkehrssteuerung unterstützt; und
Senden einer PDP-Richtlinienanforderung des mobilen Endgeräts zu einer "Policy Charging and Control Rules Function" bzw. PCRF und Empfangen von PDP-Richtlinienantwortinformationen, die durch die PCRF zurückgesendet werden, wobei die Antwortinformationen die Informationen umfassen, die angeben, ob das PDP des mobilen Endgeräts die lokalisierte Verkehrssteuerung unterstützt;
wobei das Implementieren, durch den Verkehrsknoten, dem erlaubt ist, den lokalisierten Verkehrsaustausch auf der Verbindung, die der Zugangsanforderung entspricht, zu implementieren, und den nachfolgenden Verkehrsknoten, des lokalisierten Verkehrsaustausches als Reaktion auf die Zugangsanforderung gemäß den Angabeinformationen und der Voreinstellung des Verkehrsknotens und des nachfolgenden Verkehrsknotens Folgendes umfasst:
Implementieren, durch den Verkehrsknoten, dem erlaubt ist, den lokalisierten Verkehrsaustausch auf der Verbindung, die der Zugangsanforderung entspricht, zu implementieren, und den nachfolgenden Verkehrsknoten, des lokalisierten Verkehrsaustausches für das PDP des mobilen Endgeräts gemäß den Angabeinformationen und der Voreinstellung des Verkehrsknotens und des nachfolgenden Verkehrsknotens.

2. Verfahren nach Anspruch 1, ferner umfassend:
nachdem der Verkehrsknoten auf der Verbindung, die der Zugangsanforderung entspricht, die Angabeinformationen empfängt, Liefern der Angabeinformationen zum nachfolgenden Verkehrsknoten Schicht für Schicht, um den nachfolgenden Verkehrsknoten zu aktivieren, so dass der lokalisierte Verkehrsaustausch als Reaktion auf die Zugangsanforderung gemäß den Angabeinformationen und der Voreinstellung des nachfolgenden Verkehrsknotens implementiert wird.

3. Verfahren, das durch einen Verkehrsknoten implementiert wird, zum Steuern eines lokalisierten Verkehrsaustausches in einem Breitband-Mobilnetz, umfassend:
Empfangen (201) von Angabeinformationen, die zum Angeben verwendet werden, dass einem Verkehrsknoten erlaubt ist, den lokalisierten Verkehrsaustausch zu implementieren;
Bestimmen (202), ob der Verkehrsknoten den lokalisierten Verkehrsaustausch gemäß der Voreinstellung des Verkehrsknotens unterstützt; und
falls bestimmt wird, dass der Verkehrsknoten den lokalisierten Verkehrsaustausch unterstützt, Implementieren (203) des lokalisierten Verkehrsaustausches gemäß den Angabeinformationen,
**dadurch gekennzeichnet, dass** das Verfahren ferner Folgendes umfasst:
nachdem ein PDP eines mobilen Endgeräts den lokalisierten Verkehrsaustausch implementiert, wenn eine zulässige Unterbrechung am mobilen Endgerät durchgeführt werden muss, Empfangen einer Anforderungsnachricht zum Abbrechen des lokalisierten Verkehrsaustausches für das PDP des mobilen Endgeräts, wobei die Anforderungsnachricht PDP-Informationen des mobilen Endgeräts umfasst; und
Abbrechen des lokalisierten Verkehrsaustausches des Verkehrsknotens für das PDP des mobilen Endgeräts gemäß den PDP-Informationen des mobilen Endgeräts.

4. Kanalsteuerknoten, umfassend:
eine erste Empfangseinheit (71), die dazu konfiguriert ist, eine Anforderungsnachricht eines mobilen Endgeräts zu empfangen;
eine Erhalteeinheit (72), die dazu konfiguriert ist, Bedingungsinformationen zu erhalten, die angeben, ob einem Verkehrsknoten auf einer Verbindung, die der Zugangsanforderung entspricht, erlaubt ist, einen lokalisierten Verkehrsaustausch zu implementieren; und
eine erste Sendeeinheit (73), die dazu konfiguriert ist, Angabeinformationen zum Verkehrsknoten auf der Verbindung, die der Zugangsanforderung entspricht, zu senden, wenn die durch die Erhalteeinheit erhaltenen Bedingungsinformationen lauten, dass dem Verkehrsknoten auf der Verbindung, die der Zugangsanforderung entspricht, erlaubt ist, den lokalisierten Verkehrsaustausch zu implementieren, um den Verkehrsknoten, dem erlaubt ist, den lokalisierten Verkehrsaustausch auf der Verbindung, die der Zugangsanforderung entspricht, zu implementieren, und einen nachfolgenden Verkehrsknoten zu aktivieren, so dass der lokalisierte Verkehrsaustausch als Reaktion auf die Zugangsanforderung gemäß den Angabeinformationen und der Voreinstellung des Verkehrsknotens und des nachfolgenden Verkehrsknotens implementiert wird;
wobei die Bedingungsinformationen Folgendes umfassen:
Informationen, die angeben, ob ein APN des mobilen Endgeräts die lokalisierte Verkehrssteuerung unterstützt, und Informationen, die angeben, on ein PDP des mobilen Endgeräts die lokalisierte Verkehrssteuerung unterstützt; und
wobei die erste Sendeeinheit (73) dazu konfiguriert ist, Angabeinformationen zum Verkehrsknoten auf der Verbindung, die der Zugangsanforderung entspricht, zu senden, wenn die durch die Erhalteeinheit erhaltenen Bedingungsinformationen lauten, dass der APN des mobilen Endgeräts die lokalisierte Verkehrssteuerung unterstützt und das PDP des mobilen Endgeräts die lokalisierte Verkehrssteuerung unterstützt;
**dadurch gekennzeichnet, dass** die Erhalteeinheit Folgendes umfasst:
ein erstes Empfangsmodul (721), das dazu konfiguriert ist, Aktivierungsanforderungsinformationen, die durch einen Mobilitätsnetzwerkelement-Steuerknoten gesendet werden, zu empfangen, wobei die Aktivierungsanforderungsinformationen die Informationen umfassen, die angeben, ob ein APN des mobilen Endgeräts die lokalisierte Verkehrssteuerung unterstützt;
ein Sendemodul (722), das dazu konfiguriert ist, eine PDP-Richtlinienanforderung des mobilen Endgeräts zu einer PCRF zu senden; und
ein zweites Empfangsmodul (723), das dazu konfiguriert ist, PDP-Richtlinienantwortinformationen, die durch die PCRF zurückgesendet werden, zu empfangen, wobei die Antwortinformationen die Informationen umfassen, die angeben, ob das PDP des mobilen Endgeräts die lokalisierte Verkehrssteuerung unterstützt.

5. Kanalsteuerknoten nach Anspruch 4, ferner umfassend:
eine zweite Empfangseinheit (74), die dazu konfiguriert ist, eine Anforderung für eine zulässige Unterbrechung am mobilen Endgerät zu empfangen;
eine Bestimmungseinheit (75), die dazu konfiguriert ist, zu bestimmen, ob der lokalisierte Verkehrsaustausch für das PDP des mobilen Endgeräts gestartet ist; und
eine zweite Sendeeinheit (76), die dazu konfiguriert ist, wenn die Bestimmungseinheit bestimmt, dass der lokalisierte Verkehrsaustausch für das PDP des mobilen Endgeräts gestartet ist, eine Anforderungsnachricht zum Abbrechen des lokalisierten Verkehrsaustausches für das PDP des mobilen Endgeräts zum Verkehrsknoten, der den lokalisierten Verkehrsaustausch für das PDP des mobilen Endgeräts implementiert, zu senden, wobei die Anforderungsnachricht PDP-Informationen des mobilen Endgeräts umfasst.

6. Verkehrsknoten, umfassend:
eine erste Empfangseinheit (81), die dazu konfiguriert ist, Angabeinformationen zu empfangen, die zum Angeben verwendet werden, dass dem Verkehrsknoten erlaubt ist, einen lokalisierten Verkehrsaustausch zu implementieren;
eine Bestimmungseinheit (82), die dazu konfiguriert ist, zu bestimmen, ob der Verkehrsknoten den lokalisierten Verkehrsaustausch gemäß der Voreinstellung des Verkehrsknotens unterstützt; und
eine Implementierungseinheit (83), die dazu konfiguriert ist, den lokalisierten Verkehrsaustausch gemäß den Angabeinformationen zu implementieren, wenn die Bestimmungseinheit bestimmt, dass der Verkehrsknoten den lokalisierten Verkehrsaustausch unterstützt;
**dadurch gekennzeichnet, dass** der Verkehrsknoten ferner Folgendes umfasst:
eine zweite Empfangseinheit (84), die dazu konfiguriert ist, nachdem ein PDP eines mobilen Endgeräts den lokalisierten Verkehrsaustausch implementiert, wenn eine zulässige Unterbrechung am mobilen Endgerät durchgeführt werden muss, eine Anforderungsnachricht zum Abbrechen des lokalisierten Verkehrsaustausches für das PDP des mobilen Endgeräts zu empfangen, wobei die Anforderungsnachricht PDP-Informationen des mobilen Endgeräts umfasst; und
eine Entfernungseinheit (85), die dazu konfiguriert ist, den lokalisierten Verkehrsaustausch des Verkehrsknotens für das PDP des mobilen Endgeräts gemäß den durch die zweite Empfangseinheit empfangenen PDP-Informationen des mobilen Endgeräts abzubrechen.

7. Verkehrsknoten nach Anspruch 6, ferner umfassend:
eine dritte Empfangseinheit (86), die dazu konfiguriert ist, Befehlskonfigurationsinformationen zum Hinzufügen eines Inhaltsknotens zu empfangen; und
eine Einstelleinheit (87), die dazu konfiguriert ist, den Inhaltsknoten gemäß den durch die dritte Empfangseinheit empfangenen Befehlskonfigurationsinformationen einzustellen.

8. System zum Steuern eines lokalisierten Verkehrsaustausches in einem Breitband-Mobilnetz, umfassend:
einen Kanalsteuerknoten (91) gemäß Anspruch 4 und
einen Verkehrsknoten (92) gemäß Anspruch 6.

## Revendications

1. Procédé, mis en oeuvre par un noeud de commande de canal, pour commander un échange de trafic localisé dans un réseau à large bande mobile, comprenant :
la réception (101) d'une requête d'accès d'un terminal mobile, et l'obtention d'informations de condition qui indiquent qu'un noeud de trafic sur une liaison correspondant à la requête d'accès est autorisé ou non à mettre en oeuvre l'échange de trafic localisé ; et
si les informations de condition sont que le noeud de trafic sur la liaison correspondant à la requête d'accès est autorisé à mettre en oeuvre l'échange de trafic localisé, l'envoi (102) d'informations d'indication au noeud de trafic sur la liaison correspondant à la requête d'accès, de manière à permettre au noeud de trafic qui est autorisé à mettre en oeuvre l'échange de trafic localisé sur la liaison correspondant à la requête d'accès et à un noeud de trafic suivant de mettre en oeuvre l'échange de trafic localisé en réponse à la requête d'accès conformément aux informations d'indication et le préréglage d'un noeud de trafic et d'un noeud de trafic suivant ;
dans lequel les informations de condition comprennent :
des informations qui indiquent qu'un nom de point d'accès, APN, du terminal mobile prend ou non en charge une commande de trafic localisé et des informations qui indiquent qu'un protocole de données par paquets, PDP, du terminal mobile prend ou non en charge la commande de trafic localisé ; et
si les informations de condition sont que le noeud de trafic sur la liaison correspondant à la requête d'accès est autorisé à mettre en oeuvre l'échange de trafic localisé, l'envoi des informations d'indication au noeud de trafic sur la liaison correspondant à la requête d'accès comprend : si les informations de condition sont que l'APN du terminal mobile prend en charge la commande de trafic localisé et le PDP du terminal mobile prend en charge la commande de trafic localisé, l'envoi des informations d'indication au noeud de trafic sur la liaison correspondant à la requête d'accès,
**caractérisé en ce que** l'obtention des informations de condition qui indiquent que le nom de trafic sur la liaison correspondant à la requête d'accès est autorisé ou non à mettre en oeuvre l'échange de trafic localisé comprend :
la réception d'informations de requête d'activation envoyées par un noeud de commande d'élément de réseau de mobilité, dans lequel les informations de requête d'activation comprennent les informations qui indiquent que l'APN du terminal mobile prend ou non en charge la commande de trafic localisé ; et
l'envoi d'une requête de stratégie PDP du terminal mobile à une fonction de facturation et commande de stratégie, PCRF, et la réception d'informations de réponse de stratégie PDP renvoyées par la PCRF, dans lequel les informations de réponse comprennent les informations qui indiquent que le PDP du terminal mobile prend ou non en charge la commande de trafic localisé ;
dans lequel la mise en oeuvre, par le noeud de trafic qui est autorisé à mettre en oeuvre l'échange de trafic localisé sur la liaison correspondant à la requête d'accès et le noeud de trafic suivant, de l'échange de trafic localisé en réponse à la requête d'accès conformément aux informations d'indication et le réglage d'un noeud de trafic et d'un noeud de trafic suivant comprennent :
la mise en oeuvre, par le noeud de trafic qui est autorisé à mettre en oeuvre l'échange de trafic localisé sur la liaison correspondant à la requête d'accès et le noeud de trafic suivant, de l'échange de trafic localisé pour le PDP du terminal mobile conformément aux informations d'indication et le réglage d'un noeud de trafic et d'un noeud de trafic suivant.

2. Procédé selon la revendication 1, comprenant en outre :
après que le noeud de trafic sur la liaison correspondant à la requête d'accès reçoit les informations d'indication, la délivrance des informations d'indication au noeud de trafic suivant couche par couche, de manière à permettre au noeud de trafic suivant de mettre en oeuvre l'échange de trafic localisé en réponse à la requête d'accès conformément aux informations d'indication et le réglage d'un noeud de trafic suivant.

3. Procédé, mis en oeuvre par un noeud de trafic, pour commander un échange de trafic localisé dans un réseau à large bande mobile, comprenant :
la réception (201) d'informations d'indication utilisées pour indiquer qu'un noeud de trafic est autorisé à mettre en oeuvre l'échange de trafic localisé ;
la détermination (202) que le noeud de trafic prend ou non en charge l'échange de trafic localisé conformément au préréglage d'un noeud de trafic ; et
s'il est déterminé que le noeud de trafic prend en charge l'échange de trafic localisé, la mise en oeuvre (203) de l'échange de trafic localisé conformément aux informations d'indication,
**caractérisé en ce que** le procédé comprend en outre :
après qu'un PDP d'un terminal mobile met en oeuvre l'échange de trafic localisé, quand une interception légitime doit être exécutée sur le terminal mobile, la réception d'un message de requête d'annulation de l'échange de trafic localisé pour le PDP du terminal, dans lequel le message de requête comprend des informations PDP du terminal mobile ; et
l'annulation de l'échange de trafic localisé d'un noeud de trafic du PDP du terminal mobile conformément aux informations PDP du terminal mobile.

4. Noeud de commande de canal, comprenant :
une première unité de réception (71), configurée pour recevoir une requête d'accès d'un terminal mobile ;
une unité d'obtention (72), configurée pour obtenir des informations de condition qui indiquent qu'un noeud de trafic sur une liaison correspondant à la requête d'accès est autorisé ou non à mettre en oeuvre l'échange de trafic localisé ; et
une première unité d'envoi (73), configurée pour envoyer des informations d'indication au noeud de trafic sur la liaison correspondant à la requête d'accès quand les informations de condition obtenues par l'unité d'obtention sont que le noeud de trafic sur la liaison correspondant à la requête d'accès est autorisé à mettre en oeuvre l'échange de trafic localisé, de manière à permettre au noeud de trafic qui est autorisé à mettre en oeuvre l'échange de trafic localisé sur la liaison correspondant à la requête d'accès et à un noeud de trafic suivant de mettre en oeuvre l'échange de trafic localisé en réponse à la requête d'accès conformément aux informations d'indication et le préréglage d'un noeud de trafic et d'un noeud de trafic suivant ;
dans lequel les informations de condition comprennent :
des informations qui indiquent qu'un APN du terminal mobile prend ou non en charge une commande de trafic localisé et des informations qui indiquent qu'un protocole de données par paquets, PDP, du terminal mobile prend ou non en charge la commande de trafic localisé ; et
la première unité d'envoi (73) est configurée pour envoyer des informations d'indication au noeud de trafic sur la liaison correspondant à la requête d'accès quand les informations de condition obtenues par l'unité d'obtention sont que l'APN du terminal mobile prend en charge la commande de trafic localisé et le PDP du terminal mobile prend en charge la commande de trafic localisé ;
**caractérisé en ce que** l'unité d'obtention comprend :
un premier module de réception (721), configuré pour recevoir des informations de requête d'activation envoyées par un noeud de commande d'élément de réseau de mobilité, dans lequel les informations de requête d'activation comprennent les informations qui indiquent qu'un APN du terminal mobile prend ou non en charge la commande de trafic localisé ;
un module d'envoi (722), configuré pour envoyer une requête de stratégie PDP du terminal mobile à une PCRF ; et
un second module de réception (723), configuré pour recevoir des informations de réponse de stratégie PDP renvoyées par la PCRF, dans lequel les informations de réponse comprennent les informations qui indiquent que le PDP du terminal mobile prend ou non en charge la commande de trafic localisé.

5. Noeud de commande de canal selon la revendication 4, comprenant en outre :
une deuxième unité de réception (74), configurée pour recevoir une requête d'interception légitime sur le terminal mobile ;
une unité de détermination (75), configuré pour déterminer que l'échange de trafic localisé pour le PDP du terminal mobile a commencé ; et
une seconde unité d'envoi (76), configuré pour : quand l'unité de détermination détermine que l'échange de trafic localisé pour le PDP du terminal mobile a commencé,
envoyer un message de requête d'annulation de l'échange de trafic localisé pour le PDP du terminal au noeud de trafic qui met en oeuvre l'échange de trafic localisé pour le PDP du terminal mobile, dans lequel le message de requête comprend des informations PDP du terminal mobile.

6. Noeud de trafic, comprenant :
une première unité de réception (81) configurée pour recevoir des informations d'indication utilisées pour indiquer qu'un noeud de trafic est autorisé à mettre en oeuvre l'échange de trafic localisé ;
une unité de détermination (82), configurée pour déterminer que le noeud de trafic prend ou non en charge l'échange de trafic localisé conformément au préréglage du noeud de trafic ; et
une unité de mise en oeuvre (83), configuré pour mettre en oeuvre l'échange de trafic localisé conformément aux informations d'indication quand l'unité de détermination détermine que le noeud de trafic prend en charge l'échange de trafic localisé ;
**caractérisé en ce que** le noeud de trafic comprend en outre :
une seconde unité de réception (84), configurée pour, après qu'un PDP d'un terminal mobile met en oeuvre l'échange de trafic localisé, quand une interception légitime doit être exécutée sur le terminal mobile, recevoir un message de requête d'annulation de l'échange de trafic localisé pour le PDP du terminal, dans lequel le message de requête comprend des informations PDP du terminal mobile ; et
une unité de suppression (85), configurée pour annuler l'échange de trafic localisé du noeud de trafic du PDP du terminal mobile conformément aux informations PDP du terminal mobile reçues par la seconde unité de réception.

7. Noeud de trafic selon la revendication 6, comprenant en outre :
une troisième unité de réception (86), configurée pour recevoir des informations de configuration de commande afin d'ajouter un noeud de contenu ; et
une unité de réglage (87), configuré pour régler le noeud de contenu conformément aux informations de configuration de commande reçues par la troisième unité de réception.

8. Système de commande d'un échange de trafic localisé dans un réseau à large bande mobile, comprenant :
un noeud de commande de canal (91) selon la revendication 4 ; et
un noeud de trafic (92) selon la revendication 6.
